# NEW EUROPEAN PATENT SPECIFICATION

(11) **EP 1 681 239 B2**
(45) Date of publication and mention of the opposition decision: **13.07.2016**
(45) Mention of the grant of the patent: 25.06.2008
(21) Application number: 05113043.3
(22) Date of filing: 28.12.2005
(51) Int. Cl.: B65D 1/02, B32B 27/36

(54) **Preform, method for producing a preform and a container**
Vorformling, Verfahren zum Herstellen eines Vorformlings und eines Behälters
Préforme, procédé de fabrication d'une préforme et d'un récipient

(30) Priority: 31.12.2004 IT MO20040354
(43) Date of publication of application: 19.07.2006
(73) Proprietor: Granarolo S.P.A., 40127 Bologna (BO) (IT)
(72) Inventor: Bombardieri, Raffaele, 40059, Medicina (BO) (IT); Borsari, Andrea, 40127, Bologna (IT)
(74) Representative: Asensio, Raffaella Consuelo

(56) References cited:
- EP-A- 0 180 191
- EP-A- 0 325 440
- WO-A-01/34479
- US-A- 4 743 479
- US-A- 6 090 460
- US-A1- 2004 195 141

## Description

The invention relates to a preform, starting with which it is possible to obtain a container, for example a bottle by "blow moulding* techniques such as sketch-blow-moulding. The invention furthermore relates to a method for producing such a preform. Lastly, the invention relates to a container, for example a bottle obtained by shaping the preform.

The features of the preamble of claims 1 and 27 are known from US 6 090 460.

In the packaging of food products, such as milk, it is advisable to use containers having properties of bar-riers to visible light in such a way as to prevent or slow down the processes of degradation of the food products that are activated in the presence of light.

In order to overcome these drawback, IT 139643 discloses a container suitable for containing milk and consisting of three layers of high-density polyethylene (HDPE). These layers comprises a first external layer containing titanium dioxide, a second intermediate layer containing carbon black and a third internal layer that may contain titanium dioxide. The first external laver en-ables the light rays to be stopped that have a wavelength equal to or greater than 300 nanometres, whereas the second intermediate layer enables the light rays to be stopped that have a wavelength that is less than 800 nanometres, between which visible light is comprised. The third internal layer prevents the milk contained in the container from coming into contact with the carbon black contained in the second intermediate layer.

The containers according to IT 139643 are obtained by a process of coextrusion in which the polymers, initially in the form of granules or powder, intended to form the three layers disclosed above, are heated to the softening temperature and are subsequently extruded through the respective extrusion outlets such as to obtain the container, for example the bottle, according to the desired geometry.

The companies that package and market food products inside containers of the type disclosed in IT 139643 must be equipped in such a way as to carry out by themselves the process of coextrusion and subsequently fill the containers obtained by the process with the desired food product. In order to do so, the companies must be equipped with relatively big extrusion machines provided with a polymer supply zone, a softening zone comprising respective extrusion screws and finally an outlet zone in which the extrusion outlets are located. It is furthermore necessary to provide storage areas of the raw materials, namely polymers in the form of granules or powder, normaiiy arranged outside the production facilities and provided with silos of great capacity.

The coextrusion process is relatively difficult to control inasmuch as a large number of process parameters has to be monitored and it is necessary to ensure that their value remains within preset ranges.

Lastly, the HDPE containers disclosed in IT 139643 have relatively high permeability to the oxygen contained in the air, which means that when the containers have to receive substances that are alterable by oxygen, it may be necessary to provide additives that improve the oxygen-barrier properties of the HDPE.

One object of the invention is to improve the containers, particularly the bottles for food products, and the methods for obtaining such containers.

The disclosure relates to a method for obtaining containers that may be carried out in the bottling company using plant of relatively small dimensions.

The disclosure further relates to a method for obtaining containers that can be easily controlled and implemented. Another object is to provide containers having good light-barrier properties and which simultaneously have improved oxygen-barrier properties, even in the absence of oxygen-absorbing additives.

In a first aspect of the invention, there is provided a preform according to claim 1.

Owing to this aspect of the invention, it is possible to simplify the processes of production of containers, for example bottles. In fact, the companies that package and marketfoood products can purchase the preforms from the respective manufacturers and merely shape the preforms according to the geometry of the desired container, for example by means of machines for stretchblow-moulding of the PET polymer in cavity moulds. This enables companies that package and market food products to reduce the dimensions of their production facilities inasmuch as the machines for stretch-blow-moulding have smaller overall dimensions than co-extrusion plant.

It is furthermore no longer necessary to provide storage areas for raw polymers in the form of granules or powder and neither is it necessary to provide bottle-storage silos for their dimensional stabilisation.

The speed of production of the containers by companies that package and market food products is furthermore increased.

The production process is furthermore easier to control because the number of phases decrease that have to be carried out inside companies that package and market food products.

In a second aspect of the invention, there is provided a container according to claim 24.

Owing to the second aspect of the invention, it is possible to obtain a container having excellent visible light-barrier properties and improved impermeability to oxygen compared with known HDPE containers. Furthermore, PET is a material that can be processed by co-injection. The container according to the second aspect of the invention is the suitable for being formed from coinjected preforms.

The invention can be better understood and implemented with reference to the attached drawings that show some non-limitative embodiments by way of example in which:
Figure 1 shows a schematic section of a preform with three layers;
Figure 2 shows a schematic section of a container with three layers obtained by stretch-blow-moulding from the preform shown in Figure 1;
Figure 3 shows a schematic section of a preform with three layers according to an alternative version;
Figure 4 shows a schematic section of a container with three layers obtained by stretch-blow-moulding from the preform shown in Figure 3;
Figure 5 shows an enlarged detail of a wall of a container with five layers.

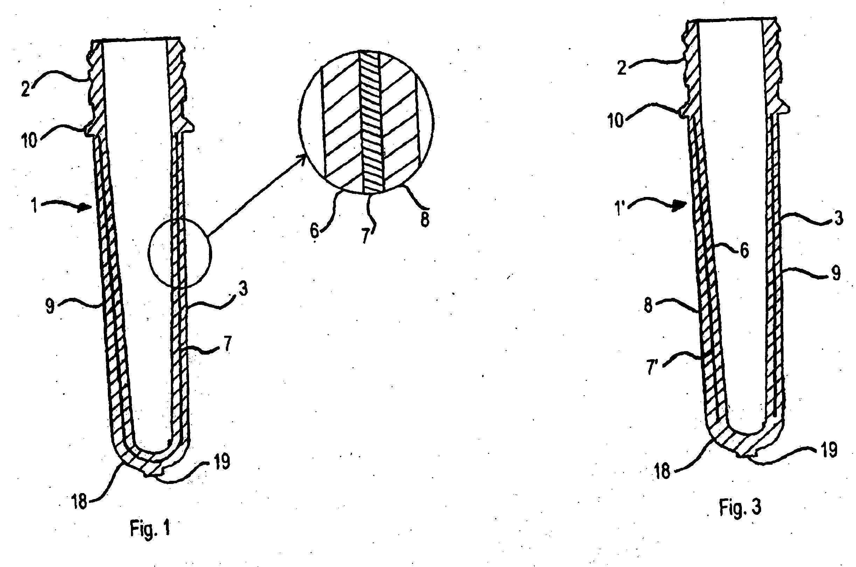

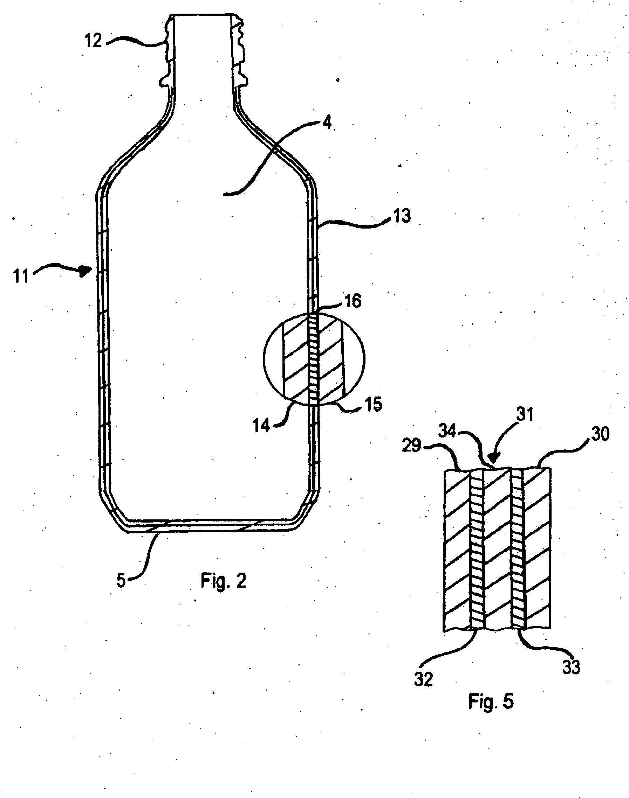

With reference to Figure 1, three is shown a preform 1 that is usable to obtain a container 11 by stretch-blow-moulding, for example a bottle, of the type shown in Figure 2.

The preform 1 is particularly suitable for forming a container 11 intended to receive a food product, for example fresh pasteurised milk, extended shelf life ESL pasteurised milk, long-life UHT milk, cream, fermented milks, milk-based liquid products and fermented milk-based products with the addition of other ingredients, fruit juices or the like, drinks containing fruit juices and milk and/or yoghurt.

Filling of the bottles/containers obtained from the preforms of the present invention occurs with liquid food products at a temperature of between 0°C to 50°C.

The preform 1 comprises a body 3 and a threaded and 2 suitable for forming a threaded neck of the container 11. The body 3 comprises a tubular wall 9 having a substantially cylindrical shape closed at its end opposite the threaded and 2 by a concave wall 18. Between the threaded end 2 and the body 3 there is interposed a collar or ring 10 that enables the preform to be grasped to handle it during the forming process. At the end of the stretch-blow-moulding process of the container 11, the threaded end 2 and the collar 10 remain substantially undeformed whereas the body 3 is shaped in such a way as to form a wall 13 of the container 11.

The body 3 is made of three layers comprising, as better seen from the enlarged detail in Figure 1, an internal layer 6, an external layer 8 and a barrier layer 7 interposed between the internal layer 6 and the external layer 8. Both the internal layer 6 and the external layer 8 and the barrier layer 7 are made of polyethylene terephthalate (PET).

In particular, the barrier layer 7 contains pigments that make it substantially impermeable to visible light so as to protect the contents of the container 11 from light rays, thereby extending its shelf life. For example, the barrier layer 7 is made of PET coloured black, comprising a transparent (Clear) polymer mixed with a black polymer (Master Batch) or mixed with 3 black pigment in liquid paste. Both the transparent polymer and the black polymer intended to form the barrier layer 7 can be totally or partially obtained from virgin or recycled PET (PC-PET, post-consumer plastics, and/or processing off-cuts of PET).

The black colour is obtained by using carbon black. In order to have good light barrier properties it is also possible to use, in addition to carbon black, other materials such as iron powders, aluminium powder, black Iron oxides, organic and Inorganic grey and/or amber and/or brown and/or green and/or blue dyes with absorption of the visible llght between 350nm and 600nm.

The composition of the barrier layer 7 comprises clear polymer and black pigment, the latter being present in percentages varying between 2% and 8% in weight of clear polymer. In this composition, the pure carbon black represents about 25% of the black colouring master batch.

The internal layer 6 is made of PET suitable for contact with food products whereas the external layer 8 is chosen in such a way as to be aesthetically pleasing to the ussr in particular, the internal layer 6 and the external layer 8 can both be formed of white-coloured PET In such a way as to suggest an impression of hygiene and cleanliness.

The white dye contained in the external layer 8 and in the internal layer 6 has a good capacity of reflection of the visible light and of the radiation with wavelengths longer than 800nm.

Furthermore, the combination of the colouring additives with the PET polymer enables the reflecting of the light rays to be improved.

The white-coloured PET comprises a transparent (clear) polymer mixed with a white polymer (master batch) or mixed with a white dye in liquid paste. Both the transparent polymer and the white polymer are obtained from virgin material, i.e. which is not recycled to ensure maximum safety when the container is in contact with the food product. The white colour can be obtained by using titanium dioxide and/or zinc oxide and/or calcium carbonate and/or magnesium carbonate and/or barium sulphate. To the white colour slightly yellow or cream-coloured shades can be added with the addition of a suitable colouring mixture. In a possible composition, the white dye is present in a percentage varying between 2% and 10% in weight of the clear polymer and the pure titanium dioxide forms about 65% of the white colouring master batch.

The thickness of the body 3 is comprised between 2.5 and 5 mm and preferabiy varies between 3.0 and 3.2 mm.

The preform 1 is manufactured by a process of co-injection of the type disclosed in US 5582851, WO 99/22926, WO 99/59795, WO 01/34378 or WO 2004/867254. Reference is made to the above patent documents, the contents of which are included here, for a detailed description of the process of co-injection and of the apparatuses in which the process can be actuated.

In these apparatuses, the clear polymer is first mixed with the white polymer or the white dye in the quantities indicated previously so as to obtain a white-coloured PET that will constitute the internal layer 6 and the external layer 8, in similar ways, the clear polymer and the black dye or the black polymer are dosed in the requested quantities and are mixed so as to obtain a black-coloured PET that will constitute the barrier layer 7. The white-coloured PET and the black-coloured PET coming from respective supply conduits flow into a single injection conduit ending in a mould that reproduces the shape of the preform 1. The injection conduit, which may be selectively opened or shut by a shutting needle, is arranged near the concave wall 168. At the point in which the plastics enter the mould, a protuberance 19 remains on the concave wall 16. For reasons connected with the supply sequence of the white-coloured PET and of the black-coloured PET, and with their viscosity, the white-coloured PET is arranged in the mould in such a way as to form both the internal layer 6 and the external layer 8. These two layers thus have the same composition. The black-coloured PET forms the barrier layer 7 instead.

The known processes of co-injection of preforms fall into two categories, namely parallel-flow processes and step processes. In the first case, the flows of plastics intended to form the different layers of the preform advance simultaneously inside the mould in which the preform is obtained. In the step process, on the other hand, the plastics intended to form the different layers of the preform are injected one after another.

In an embodiment obtained by the parallel-flow process, the internal layer 6 could be formed of a quantity of plastics in a range around 20% in weight of the preform 1. The quantity of material used to form the barrier layer 7 may vary between 4% and 14% in weight of the preform 1. As a result, the material of the external layer 8 varies between 66% and 76% in weight of the preform 1. This means that the thickness of the internal layer 6 could be constant whereas the thickness of the barrier layer 7 and of the external layer 8 may vary according to the percentage in weight of plastics from which they are formed in relation to the weight of the preform 1.

In the version shown in Figure the barrier layer 7 starts immediately below the collar 10 and extends along the entire body 3, it is namely present both in the tubular wall 9 and in the concave wall 18. On the other hand, the threaded end 2 has a single-layer structure. A preform of this type can be obtained by the process of parallel-flow co-injection.

Figure 2 shows a container 11 obtained from the preform 1 by a known process of stretch-blow-moulding. Inside the container 11 a cavity 4 is identifiable that is suitable for receiving contents, for example a food product, and is delimited by a side wall 13 and by a bottom wall 5. The container 11 furthermore comprises a threaded neck 12 on which a cap can be screwed that is not shown to dose the container 11.

The side wall 13 and the bottom wall 5 comprise a first layer 14 facing the cavity 4, a second layer 15 facing the outside of the container 11 and an intermediate layer 16 interposed between the first layer 14 and the second layer 15. The first layer 14 is obtained by shaping the internal layer 6 of the preform 1, whereas the inter-mediate layer 16 and the second layer 15 are respectively obtained from the barrier layer 7 and from the external layer 8. Accordingly, the first layer 14 is made of white PET, the intermediate layer 16 is made of black PET and the second layer 15 is made of white PET. In particular, the intermediate layer 16 acts as abarrierto light enabling the contents of the container 11 to be protected from light rays.

With reference to the bottle-shaped container 11 with a body diameter of about 85 mm, 38 mm mouth diameter and about 250 mm height, the thickness of the first layer 14 can be comprised between 20 and 100 micrometers, the thickness of the second layer 15 between 100 and 200 micrometers and that of the intermediate layer 16 between 20 and 100 micrometers. In an alternative embodiment, shown in Figure 3, there is provided a preform 1' that differs from the preform 1 shown in Fig. ure 1 because it is provided with a barrier layer 7' that affects only a part of the body 3. In particular, the barrier layer 7' extends along the tubular wall 9, but not in the concave wall 18, which therefore has a single-layered structure. The barrier layer 7' extends upwardly to the collar 10, as already disclosed with reference to Figure 1.

The barrier layer 7', shaped as shown in Figure 3, can be obtained by the process of step co-injection. If this process is used, preforms are produced in which the internal layer 6 and the external layer 8 substantially have the same thickness. The barrier layer 7' can be formed of a quantity of plastics that varies between 20% and 30% in weight of the preform 1', whereas the internal layer 6 and the external layer 8 are each formed of a quantity of plastics variable between 40% and 35% in weight of the preform 1'.

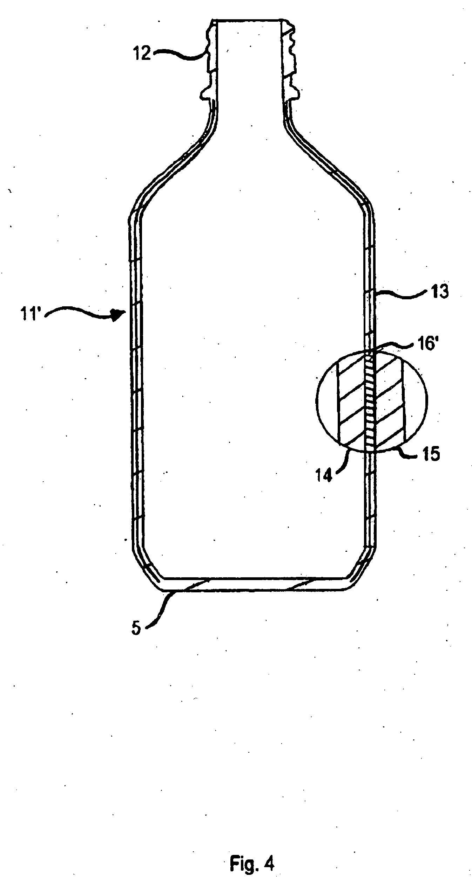

By subjecting the preform 1' to a process of stretch-blow-moulding, a container 11' of the type shown in Figure 4 is obtained, provided with an intermediate layer 16' that extends along the side wall 13, without however being present in the bottom wall 5. Even if the intermediate layer 16' does not extend into the bottom wall 5, correct conservation of the food product arranged inside the container 11' is not compromised. The bottom wall 5 is in fact intended to be rested on a surface, for example of a shelf, and is not therefore hit by the light, A similar situation also occurs in the threaded neck 12, in which a cap normally engages that prevents the passage of light.

In a preform according to a version that is not shown, the barrier layer does not stop near the collar, but also extends through the threaded end.

In another embodiment, shown in Figure 5, the body of the preforms and the walls of the container obtained therefrom can be provided with five layers comprising a first peripheral layer 29, a second peripheral layer 30 and barrier means 31 interposed between the first peripheral layer 30 and the second peripheral layer 29. The barrier means 31 comprises a first barrier layer 32 adjacent to the first peripheral layer 29 and a second barrier layer 33 adjacent to the second peripheral layer 30. Between the first barrier layer 32 and the second barrier layer 33 a central layer 34 is interposed.

The preform comprising the aforementioned five layers can be manufactured by means of co-injection, in particular of the parallel-flow type. In this case the first peripheral layer 29, the second peripheral layer 30 and the central layer 34 are made with a first common material, whereas the first barrier layer 32 and the second barrier layer 33 are formed of a second common material. In particular, the first barrier layer 32 and the second barrier layer 33 are substantially impermeable to light in such a way as to protect the food product contained inside the container. For this purpose, the first barrier layer 32 and the second barrier layer 33 are made of black-coloured PET, having a composition similar to that previously disclosed with reference to the barrier layer 7 of the preform 1 shown in Figure 1. The first peripheral layer 29, the second peripheral layer 30 and the central layer 34 can on the other hand be made of a material suitable for contact with food products, for example the white-coloured PET in the compositions previously disclosed in Figure 1.

The plastics are distributed in the five layers that constitute the preform in this way: the central layer 34 comprises 20% in weight of the plastics constituting the preform, whereas the black-coloured PET forming the first barrier layer 32 and the second barrier layer 33 is present in a quantity varying between 4% and 5% in weight of the preform. As a result, the white-coloured PET that forms the first peripheral layer 29 and the second peripheral layer 30 varies between 75% and 76% in weight of the preform.

In an embodiment that is not shown, the preform and the container obtained from it may have a two-layer structure comprising a barrier layer in black-coloured PET and a layer in white-coloured PET arranged outside or inside the barrier layer.

The PET has good barrier properties to oxygen; nevertheless, it is possible to improve these properties, if for example a food product that easily deteriorates in the presence of even very small quantities of oxygen has to be packaged, by introducing a polymer with great impermeability to oxygen such as polyamide MXD6 in the PET of the intermediate layer. Furthermore, in the present invention it is possible to introduce into the intermediate light-barrier layer substances absorbing oxygen in such a way as to further improve the impermeability of the PET to oxygen and to thus confer particular protection on the food products that would otherwise be easily oxidable. In this case substances are used such as reduced iron, Amosorb etc.

The invention was tested by manufacturing different preforms by triple-layer co-injection, each layer comprising a barrier layer in black-coloured PET with different percentages of black-coloured polymer varying from 2% to 6%; corresponding to percentages of pure carbon black varying from 0.5% to 1.5%. The barrier layer is interposed between an external layer and an internal layer in white-coloured PET obtained by adding varying quantities of white polymer to the transparent polymer.

The invention was furthermore tested by manufacturing triple-layer preforms with different additions of white polymer in such a way as to have in the internal and external layer percentages of transparent polymer from 4% to 8%; corresponding to percentages of pure Titanium dioxide from 2.6% to 5.2%.

The external layer consists of 70% in weight of the material making up the preform, whereas the barrier layer and the internal layer are respectively formed of 10% and of 20% of the total material.

Triple-layer preforms with different combinations of white and black colours have been made in accordance with the percentages quoted above.

The preforms disclosed above were subjected to a stretch-blow-moulding process using cavity moulds such as to obtain bottles of different shapes, each comprising a first layer arranged in the inside of the bottle and having a thickness of about 40 micrometers, a second layer arranged in the outside of the bottle and having a thickness of about 179 micrometers and an intermediate layer of about 38 micrometers. In order to check the high degree of protection of the barrier layer introduced with the present invention, fitting of the bottles with a food product very sensitive also to oxygen such as milk was used. The bottles were aseptically filled at 28/30°C with UHT milk sterilised in a continuous flow with a direct treatment by steam injection or by steam infusion at temperatures comprised between 145°C and 150°C for periods from 1 to 4 seconds. The bottles containing UHT milk obtained in the different experimental conditions with triple-layer preforms of different composition of the colour-ing substances and with milk corresponding to different treatment conditions were subjected to long-life conservation tests. Some bottles were then exposed to natural light with a day-night cycle, at a temperature of about 20°C for three months whereas other bottles were exposed to artificial light in a continuous manner on display benches of commercial type at a temperature of about 20°C for 6 weeks, corresponding to a period of three months with alternating light/dark cycle.

During the conservation tests and also at the end of the respective exposure periods the different milk properties were monitored by sensor panels and by chemical analysers; it was established that the milk was always of excellent quality both in the case of bottles exposed to artificial light and in the case of the bottles exposed to natural light.

This constitutes a significant improvement on the single-layer PET bottles, i.e. devoid of the intermediate layer substantially impermeable to light, in which the milk cannot be conserved for periods longer than 7 days.

## Claims

1. Preform having a body (3) comprising layer means (6, 8; 29, 30) and barrier means (7; 7'; 31) adjacent to said layer means (6, 8; 29, 30), said layer means (6, 8; 29, 30) and said barrier means (7; 7'; 31) being made of polyethylene terephthalate, **characterized in that** said barrier means (7; 7'; (31) is substantially impermeable to visible light and is made of a material comprising a dye comprising carbon black, wherein said barrier means (7; 7'; 31) comprises a quantity variable between 2% and 8% in weight of said dye and said dye comprises approximately 25% in weight of carbon black.

2. Preform according to claim 1, wherein said barrier means (7; 7'; 31) is of a dark colour.

3. Preform according to claim 2, wherein said barrier means (7; 7'; 31) is black in colour.

4. Preform according to any preceding claim, wherein said barrier means (7; 7'; 31) comprises recycled PET.

5. Preform according to any one of claims 1 to 3, wherein said barrier means (7; 7'; 31) comprises virgin PET.

6. Preform according to any preceding claim, wherein said layer means (6, 8; 29, 30) is made of a material suitable for coming into contact with food products.

7. Preform according to any preceding claim, wherein said layer means (6, 8; 29, 30) is of a light colour.

8. Preform according to claim 7, wherein said layer means (6, 8; 29, 30) is white in colour.

9. Preform according to any preceding claim, wherein said layer means (6, 8; 29, 30) contains a colouring substance selected from a group consisting of: titanium dioxide, zinc oxide, calcium carbonate.

10. Preform according to claim 9, wherein said layer means (6, 8; 29, 30) comprises a quantity variable between 2% and 10% in weight of said colouring substance.

11. Preform according to claim 9 or 10, wherein said colouring substance comprises about 65% in weight of titanium dioxide.

12. Preform according to any preceding claim, wherein said layer means (6, 8; 29, 30) comprises virgin PET.

13. Preform according to any preceding claim, wherein said layer means (6, 8; 29, 30) comprises an external layer (8; 30) and an internal layer (6; 29), said barrier means (7; 7'; 31) being interposed between said external layer (8; 30) and said internal layer (6; 29).

14. Preform according to claim 13, wherein said external layer (8; 30) and said internal layer (6; 29) have the same composition.

15. Preform according to claim 13 or 14, wherein said internal layer (6) is formed of a quantity of material equal to about 20% in weight of said preform (1), said barrier means (7) is formed of a quantity of material varying between 4% and 14% in weight of said preform (1) and said external layer (8) is formed of a quantity of material varying between 66% and 76% in weight of said preform (1).

16. Preform according to claim 13 or 14, wherein said internal layer (6; 29) and said external layer (8; 30) have a substantially equal thickness.

17. Preform according to claim 13, or 14, or 16, wherein said internal layer (6) is made of a quantity of material varying between 35% and 40% in weight of said preform (1'), said barrier means (7') is made of a quantity of material varying between 20% and 30% in weight of said preform (1') and said external layer (8) is made of a quantity of material varying between 35% and 40% in weight of said preform (1').

18. Preform according to any one of claims 13 to 17, wherein said barrier means (7; 7'; 31) comprises a single layer (7; 7') having a surface in contact with said external layer (8) and a further surface in contact with said internal layer (6).

19. Preform according to any one of claims 1 to 17, wherein said barrier means (7; 7'; 31) comprises a first barrier layer (32) and a second barrier layer (33) between which there is interposed a central layer (34).

20. Preform according to claim 19, as appended to any one of claims 16 to 20, wherein said central layer (34) is made of a quantity of material equal to about 20% in weight of said preform, the whole of said first barrier layer (32) and of said second barrier layer (33) is made of a quantity of material varying between 4% and 5% in weight of said preform and the whole of said external layer (30) and of said internal layer (29) is made of a quantity of material varying between 75% and 76% in weight of said preform.

21. Preform according to any preceding claim, wherein said body (3) comprises a side tubular wall (9), said barrier means (7) extending along said side tubular wall (9).

22. Preform according to any preceding claim, wherein said body (3) comprises an end wall (18), said barrier means (7) extending along said end wall (18).

23. Preform according to any preceding claim, and furthermore comprising a threaded end (2), said barrier means extending into said threaded end (2).

24. Container delimited by wall means (5, 13) comprising layer means (14, 15; 29, 30) and barrier means (16; 16'; 31) adjacent to said layer means (14, 15; 29, 30) said layer means (14, 15; 29, 30) and said barrier means (16; 16'; 31) being made of polyethylene terephthalate, **characterized in that** said barrier means (16; 16'; 31) is substantially impermeable to visible light and contains a dye comprising carbon black, wherein said barrier means (16; 16'; 31) comprises a quantity variable between 2% and 8% in weight of said dye and said dye comprises approximately 25% in weight of carbon black.

25. Container according to claim 24, wherein said barrier means (16; 16'; 31) is of a dark colour.

26. Container according to claim 25, wherein said barrier means (16; 16'; 31) is black in colour.

27. Container according to any one of claims 24 to 26, wherein said barrier means (16; 16'; 31) comprises recycled PET.

28. Container according to any one of claims 24 to 26, wherein said barrier means (16; 16'; 31) comprises virgin PET.

29. Container according to any one of claims 24 to 28, wherein said layer means (14, 15; 29, 30) is made of a material suitable for coming into contact with food products.

30. Container according to any one of claims 24 to 29 wherein said layer means (14, 15; 29, 30) is of a light colour.

31. Container according to claim 30, wherein said layer means (14, 15; 29, 30) is white in colour.

32. Container according to any one of claims 24 to 31, wherein said layer means (14, 15; 29, 30) is made of a material comprising a colouring substance selected from a group consisting of: titanium dioxide, zinc oxide, calcium carbonate.

33. Container according to claim 32, wherein said layer means (14, 15; 29, 30) comprises a quantity variable between 2% and 10% in weight of said colouring substance.

34. Container according to claim 32 or 33, wherein said colouring substance comprises about 65% in weight of titanium dioxide.

35. Container according to any one of claims 24 to 34, wherein said layer means (14, 15; 29, 30) comprises virgin PET.

36. Container according to any one of claims 24 to 35, wherein said layer means (14, 15; 29, 30) comprises a first layer (14; 29) facing the inside of said container (11; 11') and a second layer (15; 30) facing the outside of said container, said barrier means (16; 16'; 31) being interposed between said first layer (14; 29) and said second layer (15; 30).

37. Container according to claim 36, wherein said first layer (14; 29) and said second layer (15; 30) have the same composition.

38. Container according to claim 36 or 37, wherein said first layer (14) is made of a quantity of material equal to about 20% in weight of said container (11), said barrier means (16) is made of a quantity of material varying between 4% and 14% in weight of said container (11) and said second layer (15) is made of a quantity of material varying between 66% and 76% in weight of said container (11).

39. Container according to claim 36 or 37 wherein said first layer (14; 29) and said second layer (15; 30) have a substantially equal thickness

40. Container according to claim 36 or 37 or 39, wherein said first layer (14) is made of a quantity of material varying between 35% and 40% in weight of said container (11'), said barrier means (16') is made of a quantity of material varying between 20% and 30% in weight of said container (11') and said second layer (15) is made of a quantity of material varying between 35% and 40% in weight of said container (11').

41. Container according to any one of claims 36 to 40, wherein said barrier means comprises a single layer (16; 16') having a surface in contact with said second layer (15) and a further surface in contact with said first layer (14).

42. Container according to any one of claims 24 to 40, wherein said barrier means (16; 16'; 31) comprises a first barrier layer (32) and a second barrier layer (33) between which there is interposed a central layer (34).

43. Container according to claim 42, as appended to any one of claims 36 to 40, wherein said central layer (34) is made of a quantity of material equal to about 20% in weight of said container, the whole of said first barrier layer (32) and of said second barrier layer (33) is made of a quantity of material varying between 4% and 5% in weight of said container and the whole of said first layer (29) and of said second layer (30) is made of a quantity of material varying between 75% and 76% in weight of said container.

44. Container according to any one of claims 24 to 43, wherein said wall means (5, 13) comprises a side wall (13), said barrier means (16; 16') extending along said side wall (13).

45. Container according to any one of claims 24 to 44, wherein said wall means (5, 13) comprises a bottom wall (5) said barrier means (16) extending along said bottom wall (5)

46. Container according to any one of claims 24 to 45, and furthermore comprising a threaded neck (12), said barrier means extending in said threaded neck (12).

47. Container according to any one of claims 24 to 46, and having the shape of a bottle.

## Patentansprüche

1. Vorformling mit einem Körper (3) umfassend Schichtmittel (6, 8; 29, 30) und Barrieremittel (7; 7'; 31), die an die Schichtmittel (6, 8; 29, 30) angrenzen, wobei die Schichtmittel (6, 8; 29, 30) und die Barrieremittel (7; 7'; 31) aus Polyethylenterephthalat bestehen, **dadurch gekennzeichnet, dass** die Barrieremittel (7; 7'; (31) im Wesentlichen für sichtbares Licht undurchlässig sind und aus einem Material bestehen, umfassend einen Farbstoff umfassend Ruß, wobei die Barrieremittel (7; 7'; 31) eine zwischen 2 Gew.% und 8 Gew.% variable Menge des Farbstoffs umfassen und der Farbstoff ungefähr 25 Gew.% Ruß umfasst.

2. Vorformling nach Anspruch 1, wobei die Barrieremittel (7; 7'; 31) eine dunkle Farbe aufweisen.

3. Vorformling nach Anspruch 2, wobei die Barrieremittel (7; 7'; 31) eine schwarze Farbe aufweisen.

4. Vorformling nach einem der vorstehenden Ansprüche, wobei die Barrieremittel (7; 7'; 31) wiederaufbereitetes PET umfassen.

5. Vorformling nach einem der Ansprüche 1 bis 3, wobei die Barrieremittel (7; 7'; 31) frisches PET umfassen.

6. Vorformling nach einem der vorstehenden Ansprüche, wobei die Schichtmittel (6, 8; 29, 30) aus einem Material bestehen, das für den Kontakt mit Lebensmitteln geeignet ist.

7. Vorformling nach einem der vorstehenden Ansprüche, wobei die Schichtmittel (6, 8; 29, 30) eine helle Farbe aufweisen.

8. Vorformling nach Anspruch 7, wobei die Schichtmittel (6; 8; 29, 30) eine weiße Farbe aufweisen.

9. Vorformling nach einem der vorstehenden Ansprüche, wobei die Schichtmittel (6, 8; 29, 30) eine färbende Substanz enthalten, ausgewählt aus einer Gruppe bestehend aus: Titandioxid, Zinkoxid, Calciumcarbonat.

10. Vorformling nach Anspruch 9, wobei die Schichtmittel (6, 8; 29, 30) eine zwischen 2 Gew.% und 10 Gew.% variable Menge der färbenden Substanz umfassen.

11. Vorformling nach Anspruch 9 oder 10, wobei die färbende Substanz ungefähr 65 Gew.% Titandioxid umfasst.

12. Vorformling nach einem der vorstehenden Ansprüche, wobei die Schichtmittel (6; 8; 29, 30) frisches PET umfassen.

13. Vorformling nach einem der vorstehenden Ansprüche, wobei die Schichtmittel (6, 8; 29, 30) eine Außenschicht (8; 30) und eine Innenschicht (6; 29) umfassen, wobei die Barrieremittel (7; 7'; 31) zwischen der Außenschicht (8; 30) und der Innenschicht (6; 29) angeordnet sind.

14. Vorformling nach Anspruch 13, wobei die Außenschicht (8; 30) und die Innenschicht (6; 29) dieselbe Zusammensetzung aufweisen.

15. Vorformling nach Anspruch 13 oder 14, wobei die Innenschicht (6) aus einer Materialmenge von ca. 20 Gew.% des Vorformlings (1) gebildet ist, die Barrieremittel (7) aus einer Materialmenge im Bereich von 4 Gew.% bis 14 Gew.% des Vorformlings (1) gebildet sind und die Außenschicht (8) aus einer Materialmenge im Bereich von 66 Gew.% bis 76 Gew.% des Vorformlings (1) gebildet ist.

16. Vorformling nach Anspruch 13 oder 14, wobei die Innenschicht (6; 29) und die Außenschicht (8; 30) im Wesentlichen dieselbe Dicke aufweisen.

17. Vorformling nach Anspruch 13 oder 14 oder 16, wobei die Innenschicht (6) aus einer Materialmenge im Bereich von ca. 35 Gew.% bis 40 Gew.% des Vorformlings (1') gebildet ist, die Barrieremittel (7') aus einer Materialmenge im Bereich von 20 Gew.% bis 30 Gew.% des Vorformlings (1') gebildet sind und die Außenschicht (8) aus einer Materialmenge im Bereich von 35 Gew.% bis 40 Gew.% des Vorformlings (1') gebildet ist.

18. Vorformling nach einem der Ansprüche 13 bis 17, wobei die Barrieremittel (7; 7'; 31) eine Einzelschicht (7; 7') umfassen mit einer Oberfläche, die mit der Außenschicht (8) in Kontakt ist, und einer weiteren Oberfläche, die mit der Innenschicht (6) in Kontakt ist.

19. Vorformling nach einem der Ansprüche 1 bis 17, wobei die Barrieremittel (7; 7'; 31) eine erste Barriereschicht (32) und eine zweite Barriereschicht (33) umfassen, zwischen denen eine Mittelschicht (34) angeordnet ist.

20. Vorformling nach Anspruch 19, wenn abhängig von einem der Ansprüche 16 bis 20, wobei die Mittelschicht (34) aus einer Materialmenge von ca. 20 Gew.% des Vorformlings gebildet ist, die Gesamtheit der ersten Barriereschicht (32) und der zweiten Barriereschicht (33) aus einer Materialmenge im Bereich von 4 Gew.% bis 5 Gew.% des Vorformlings gebildet ist und die Gesamtheit der Außenschicht (30) und der Innenschicht (29) aus einer Materialmenge im Bereich von 75 Gew.% bis 76 Gew.% des Vorformlings gebildet ist.

21. Vorformling nach einem der vorstehenden Ansprüche, wobei der Körper (3) eine rohrförmige Wand (9) umfasst, wobei die Barrieremittel (7) sich längs der rohrförmigen Seitenwand (9) erstrecken.

22. Vorformling nach einem der vorstehenden Ansprüche, wobei der Körper (3) eine Stirnwand (18) umfasst, wobei die Barrieremittel (7) sich längs der Stirnwand (18) erstrecken.

23. Vorformling nach einem der vorstehenden Ansprüche, ferner umfassend ein Gewindeende (2), wobei die Barrieremittel sich in das Gewindeende (2) hinein erstrecken.

24. Behälter, der durch Wandmittel (5, 13) begrenzt ist, umfassend Schichtmittel (14, 15; 29, 30) und Barrieremittel (16; 16'; 31), die an die Schichtmittel (14, 15; 29, 30) angrenzen, wobei die Schichtmittel (14, 15; 29, 30) und die Barrieremittel (16; 16'; 31) aus Polyethylenterephthalat bestehen, **dadurch gekennzeichnet, dass** die Barrieremittel (16; 16'; 31) im Wesentlichen für sichtbares Licht undurchlässig sind und einen Ruß enthaltenden Farbstoff umfassen, wobei die Barrieremittel (16; 16'; 31) eine zwischen 2 Gew.% und 8 Gew.% variable Menge des Farbstoffs umfassen und der Farbstoff ungefähr 25 Gew.% Ruß umfasst.

25. Behälter nach Anspruch 24, wobei die Barrieremittel (16; 16'; 31) eine dunkle Farbe aufweisen.

26. Behälter nach Anspruch 25, wobei die Barrieremittel (16; 16'; 31) eine schwarze Farbe aufweisen.

27. Behälter nach einem der Ansprüche 24 bis 26, wobei die Barrieremittel (16; 16'; 31) wiederaufbereitetes PET umfassen.

28. Behälter nach einem der Ansprüche 24 bis 26, wobei die Barrieremittel (16; 16'; 31) frisches PET umfassen.

29. Behälter nach einem der Ansprüche 24 bis 28, wobei die Schichtmittel (14, 15; 29, 30) aus einem Material bestehen, das für den Kontakt mit Lebensmitteln geeignet ist.

30. Behälter nach einem der Ansprüche 24 bis 29, wobei die Schichtmittel (14, 15; 29, 30) eine helle Farbe aufweisen.

31. Behälter nach Anspruch 30, wobei die Schichtmittel (14; 15; 29, 30) eine weiße Farbe aufweisen.

32. Behälter nach einem der Ansprüche 24 bis 31, wobei die Schichtmittel (14, 15; 29, 30) aus einem Material bestehen, das eine färbende Substanz enthält, ausgewählt aus einer Gruppe bestehend aus: Titandioxid, Zinkoxid, Calciumcarbonat.

33. Behälter nach Anspruch 32, wobei die Schichtmittel (14, 15; 29, 30) eine zwischen 2 Gew.% und 10 Gew.% variable Menge der färbenden Substanz umfassen.

34. Behälter nach Anspruch 32 oder 33, wobei die färbende Substanz ungefähr 65 Gew.% Titandioxid umfasst.

35. Behälter nach einem der Ansprüche 24 bis 34, wobei die Schichtmittel (14; 15; 29, 30) frisches PET umfassen.

36. Behälter nach einem der Ansprüche 24 bis 35, wobei die Schichtmittel (14, 15; 29, 30) eine erste Schicht (14; 29) umfassen, die der Innenseite des Behälters (11; 11') zugekehrt ist, und eine zweite Schicht (15; 30), die der Außenseite des Behälters zugekehrt ist, wobei die Barrieremittel (16; 16'; 31) zwischen der ersten Schicht (14; 29) und der zweiten Schicht (15; 30) angeordnet sind.

37. Behälter nach Anspruch 36, wobei die erste Schicht (14; 29) und die zweite Schicht (15; 30) dieselbe Zusammensetzung aufweisen.

38. Behälter nach Anspruch 36 oder 37, wobei die erste Schicht (14) aus einer Materialmenge von ca. 20 Gew.% des Behälters (11) gebildet ist, die Barrieremittel (16) aus einer Materialmenge im Bereich von 4 Gew.% bis 14 Gew.% des Behälters (11) gebildet sind und die zweite Schicht (15) aus einer Materialmenge im Bereich von 66 Gew.% bis 76 Gew.% des Behälters (11) gebildet ist.

39. Behälter nach Anspruch 36 oder 37, wobei die erste Schicht (14; 29) und die zweite Schicht (15; 30) im Wesentlichen dieselbe Dicke aufweisen.

40. Behälter nach Anspruch 36 oder 37 oder 39, wobei die erste Schicht (14) aus einer Materialmenge im Bereich von ca. 35 Gew.% bis 40 Gew.% des Behälters (11') gebildet ist, die Barrieremittel (16') aus einer Materialmenge im Bereich von 20 Gew.% bis 30 Gew.% des Behälters (11') gebildet sind und die zweite Schicht (15) aus einer Materialmenge im Bereich von 35 Gew.% bis 40 Gew.% des Behälters (11') gebildet ist.

41. Behälter nach einem der Ansprüche 36 bis 40, wobei die Barrieremittel eine Einzelschicht (16; 16') umfassen mit einer Oberfläche, die mit der zweiten Schicht (15) in Kontakt ist, und einer weiteren Oberfläche, die mit der ersten Schicht (14) in Kontakt ist.

42. Behälter nach einem der Ansprüche 24 bis 40, wobei die Barrieremittel (16; 16'; 31) eine erste Barriereschicht (32) und eine zweite Barriereschicht (33) umfassen, zwischen denen eine Mittelschicht (34) angeordnet ist.

43. Behälter nach Anspruch 42, wenn abhängig von einem der Ansprüche 36 bis 40, wobei die Mittelschicht (34) aus einer Materialmenge von ca. 20 Gew.% des Behälters gebildet ist, die Gesamtheit der ersten Barriereschicht (32) und der zweiten Barriereschicht (33) aus einer Materialmenge im Bereich von 4 Gew.% bis 5 Gew.% des Behälters gebildet ist und die Gesamtheit der ersten Schicht (29) und der zweiten Schicht (30) aus einer Materialmenge im Bereich von 75 Gew.% bis 76 Gew.% des Behälters gebildet ist.

44. Behälter nach einem der Ansprüche 24 bis 43, wobei die Wandmittel (5, 13) eine Seitenwand (13) umfassen, wobei die Barrieremittel (16; 16') sich längs der Seitenwand (13) erstrecken.

45. Behälter nach einem der Ansprüche 24 bis 44, wobei die Wandmittel (5, 13) eine Bodenwand (5) umfassen, wobei die Barrieremittel (16) sich längs der Bodenwand (5) erstrecken.

46. Behälter nach einem der Ansprüche 24 bis 45, ferner umfassend einen Gewindehals (12), wobei die Barrieremittel sich in den Gewindehals (12) hinein erstrecken.

47. Behälter nach einem der Ansprüche 24 bis 46, welcher die Form einer Flasche aufweist.

## Revendications

1. Préforme ayant un corps (3) comprenant des moyens de couche (6, 8 ; 29, 30) et des moyens de barrière (7 ; 7' ; 31) adjacents auxdits moyens de couche (6, 8 ; 29, 30), lesdits moyens de couche (6, 8 ; 29, 30) et lesdits moyens de barrière (7 ; 7' ; 31) étant constitués de polyéthylène téréphthalate, **caractérisée en ce que** lesdits moyens de barrière (7; 7'; 31) sont sensiblement imperméables à la lumière visible et sont constitués d'un matériau comprenant un colorant comprenant noir de carbone, dans lequel lesdits moyens de barrière (7 ; 7' ; 31) comprennent une quantité variable entre 2% et 8% en poids dudit colorant et ledit colorant comprend approximativement 25% en poids de noir de carbone.

2. Préforme selon la revendication 1, dans laquelle lesdits moyens de barrière (7 ; 7' ; 31) sont d'une couleur sombre.

3. Préforme selon la revendication 2, dans laquelle lesdits moyens de barrière (7 ; 7' ; 31) sont de couleur noire.

4. Préforme selon une quelconque revendication précédente, dans laquelle lesdits moyens de barrière (7 ; 7' ; 31) comprennent du PET recyclé.

5. Préforme selon l'une quelconque des revendications 1 à 3, dans laquelle lesdits moyens de barrière (7 ; 7' ; 31) comprennent PET vierge.

6. Préforme selon une quelconque revendication précédente, dans laquelle lesdits moyens de couche (6, 8 ; 29, 30) sont constitués d'un matériau adapté pour venir en contact avec des produits alimentaires.

7. Préforme selon une quelconque revendication précédente, dans laquelle lesdits moyens de couche (6, 8 ; 29, 30) sont d'une couleur claire.

8. Préforme selon la revendication 7, dans laquelle lesdits moyens de couche (6, 8 ; 29, 30) sont de couleur blanche.

9. Préforme selon une quelconque revendication précédente, dans laquelle lesdits moyens de couche (6, 8 ; 29, 30) contiennent une substance colorante sélectionnée à partir d'un groupe comprenant : le dioxyde de titane, l'oxyde de zinc, le carbonate de calcium.

10. Préforme selon la revendication 9, dans laquelle lesdits moyens de couche (6, 8 ; 29, 30) comprennent une quantité variable entre 2% et 10% en poids de ladite substance colorante.

11. Préforme selon la revendication 9 ou 10, dans laquelle ladite substance colorante comprend environ 65% en poids de dioxyde de titane.

12. Préforme selon une quelconque revendication précédente, dans laquelle lesdits moyens de couche (6, 8 ; 29, 30) comprennent du PET vierge.

13. Préforme selon une quelconque revendication précédente, dans laquelle lesdits moyens de couche (6, 8 ; 29, 30) comprennent une couche externe (8 ; 30) et une couche interne (6 ; 29), lesdits moyens de barrière (7 ; 7' ; 31) étant interposés entre ladite couche externe (8 ; 30) et ladite couche interne (6 ; 29).

14. Préforme selon la revendication 13, dans laquelle ladite couche externe (8 ; 30) et ladite couche interne (6 ; 29) ont la même composition.

15. Préforme selon la revendication 13 ou 14, dans laquelle ladite couche interne (6) est formée d'une quantité de matériau égale à environ 20% en poids de ladite préforme (1), lesdits moyens de barrière (7) sont formés d'une quantité de matériau variable entre 4% et 14% en poids de ladite préforme (1) et ladite couche externe (8) est formée d'une quantité de matériau variant entre 66% et 76% en poids de ladite préforme (1).

16. Préforme selon la revendication 13 ou 14, dans laquelle ladite couche interne (6 ; 29) et ladite couche externe (8 ; 30) ont une épaisseur sensiblement égale.

17. Préforme selon la revendication 13, ou 14, ou 16, dans laquelle ladite couche interne (6) est constituée d'une quantité de matériau variant entre 35% et 40% en poids de ladite préforme (1'), lesdits moyens de barrière (7') sont constitués d'une quantité de matériau variant entre 20% et 30% en poids de ladite préforme (1') et ladite couche externe (8) est constituée d'une quantité de matériau variant entre 35% et 40% en poids de ladite préforme (1').

18. Préforme selon l'une quelconque des revendications 13 à 17, dans laquelle lesdits moyens de barrière (7 ; 7' ; 31) comprennent une unique couche (7 ; 7') ayant une surface en contact avec ladite couche externe (8) et une autre surface en contact avec ladite couche interne (6).

19. Préforme selon l'une quelconque des revendications 1 à 17, dans laquelle lesdits moyens de barrière (7 ; 7' ; 31) comprennent une première couche de barrière (32) et une deuxième couche de barrière (33) entre lesquelles est interposée une couche centrale (34).

20. Préforme selon la revendication 19, telle qu'annexée à l'une quelconque des revendications 16 à 20, dans laquelle ladite couche centrale (34) est constituée d'une quantité de matériau égale à environ 20% en poids de ladite préforme, la totalité de ladite première couche de barrière (32) et de ladite deuxième couche de barrière (33) est constituée d'une quantité de matériau variant entre 4% et 5% en poids de ladite préforme et la totalité de ladite couche externe (30) et de ladite couche interne (29) est constituée d'une quantité de matériau variant entre 75% et 76% en poids de ladite préforme.

21. Préforme selon une quelconque revendication précédente, dans laquelle ledit corps (3) comprend une paroi tubulaire latérale (9), lesdits moyens de barrière (7) s'étendant le long de ladite paroi tubulaire latérale (9).

22. Préforme selon une quelconque revendication précédente, dans laquelle ledit corps (3) comprend une paroi d'extrémité (18), lesdits moyens de barrière (7) s'étendant le long de ladite paroi d'extrémité (18).

23. Préforme selon une quelconque revendication précédente, et comprenant en outre une extrémité filetée (2), lesdits moyens de barrière s'étendant dans ladite extrémité filetée (2).

24. Récipient délimité par des moyens de paroi (5, 13) comprenant des moyens de couche (14, 15 ; 29, 30) et des moyens de barrière (16 ; 16' ; 31) adjacent auxdits moyens de couche (14, 15 ; 29, 30), lesdits moyens de couche (14, 15 ; 29, 30) et lesdits moyens de barrière (16 ; 16' ; 31) étant constitués de polyéthylène téréphthalate, **caractérisé en ce que** lesdits moyens de barrière (16; 16'; 31) sont sensiblement imperméables à la lumière visible et contiennent un colorant comprenant noir de carbone, dans lequel lesdits moyens de barrière (16 ; 16' ; 31) comprennent une quantité variable entre 2% et 8% en poids dudit colorant et ledit colorant comprend approximativement 25% en poids de noir de carbone.

25. Récipient selon la revendication 24, dans lequel lesdits moyens de barrière (16 ; 16' ; 31) sont d'une couleur sombre.

26. Récipient selon la revendication 25, dans lequel lesdits moyens de barrière (16 ; 16' ; 31) sont de couleur noire.

27. Récipient selon l'une quelconque des revendications 24 à 26, dans lequel lesdits moyens de barrière (16 ; 16' ; 31) comprennent du PET recyclé.

28. Récipient selon l'une quelconque des revendications 24 à 26, dans lequel lesdits moyens de barrière (16 ; 16' ; 31) comprennent du PET vierge.

29. Récipient selon l'une quelconque des revendications 24 à 28, dans lequel lesdits moyens de couche (14, 15; 29, 30) sont constitués d'un matériau adapté pour venir en contact avec des produits alimentaires.

30. Récipient selon l'une quelconque des revendications 24 à 29, dans lequel lesdits moyens de couche (14, 15 ; 29, 30) sont d'une couleur claire.

31. Récipient selon la revendication 30, dans lequel lesdits moyens de couche (14, 15 ; 29, 30) sont de couleur blanche.

32. Récipient selon l'une quelconque des revendications 24 à 31, dans lequel lesdits moyens de couche (14, 15; 29, 30) sont constitués d'un matériau comprenant une substance colorante sélectionnée à partir d'un groupe comprenant : le dioxyde de titane, l'oxyde de zinc, le carbonate de calcium.

33. Récipient selon la revendication 32, dans lequel lesdits moyens de couche (14, 15 ; 29, 30) comprises une quantité variable entre 2% et 10% en poids of ladite substance colorante.

34. Récipient selon la revendication 32 ou 33, dans lequel ladite substance colorante comprend environ 65% en poids de dioxyde de titane.

35. Récipient selon l'une quelconque des revendications 24 à 34, dans lequel lesdits moyens de couche (14, 15 ; 29, 30) comprennent du PET vierge.

36. Récipient selon l'une quelconque des revendications 24 à 35, dans lequel lesdits moyens de couche (14, 15 ; 29, 30) comprennent une première couche (14 ; 29) faisant face vers l'intérieur dudit récipient (11 ; 11') et une deuxième couche (15 ; 30) faisant face vers l'extérieur dudit récipient, lesdits moyens de barrière (16 ; 16' ; 31) étant interposées entre ladite première couche (14 ; 29) et ladite deuxième couche (15 ; 30).

37. Récipient selon la revendication 36, dans lequel ladite première couche (14 ; 29) et ladite deuxième couche (15 ; 30) ont la même composition.

38. Récipient selon la revendication 36 ou 37, dans lequel ladite première couche (14) est constituée d'une quantité de matériau égale à environ 20% en poids dudit récipient (11), lesdits moyens de barrière (16) sont constitués d'une quantité de matériau variant entre 4% et 14% en poids dudit récipient (11) et ladite deuxième couche (15) est constituée d'une quantité de matériau variant entre 66% et 76% en poids dudit récipient (11).

39. Récipient selon la revendication 36 ou 37 dans lequel ladite première couche (14; 29) et ladite deuxième couche (15; 30) ont une épaisseur sensiblement égale.

40. Récipient selon la revendication 36 ou 37 ou 39, dans lequel ladite première couche (14) est constituée d'une quantité de matériau variant entre 35% et 40% en poids dudit récipient (11'), lesdits moyens de barrière (16') sont constitués d'une quantité de matériau variant entre 20% et 30% en poids dudit récipient (11') et ladite deuxième couche (15) est constituée d'une quantité de matériau variant entre 35% et 40% en poids dudit récipient (11').

41. Récipient selon l'une quelconque des revendications 36 à 40, dans lequel lesdits moyens de barrière comprennent une unique couche (16 ; 16') ayant une surface en contact avec ladite deuxième couche (15) et une autre surface en contact avec ladite première couche (14).

42. Récipient selon l'une quelconque des revendications 24 à 40, dans lequel lesdits moyens de barrière (16 ; 16' ; 31) comprennent une première couche de barrière (32) et une deuxième couche de barrière (33) entre lesquelles est interposée une couche centrale (34).

43. Récipient selon la revendication 42, telle qu'annexée à l'une quelconque des revendications 36 à 40, dans lequel ladite couche centrale (34) est constituée d'une quantité de matériau égale à environ 20% en poids dudit récipient, la totalité de ladite première couche de barrière (32) et de ladite deuxième couche de barrière (33) est constituée d'une quantité de matériau variant entre 4% et 5% en poids dudit récipient et la totalité de ladite première couche (29) et de ladite deuxième couche (30) est constituée d'une quantité de matériau variant entre 75% et 76% en poids dudit récipient.

44. Récipient selon l'une quelconque des revendications 24 à 43, dans lequel lesdits moyens de paroi (5, 13) comprennent une paroi latérale (13), lesdits moyens de barrière (16 ; 16') s'étendant le long de ladite paroi latérale (13).

45. Récipient selon l'une quelconque des revendications 24 à 44, dans lequel lesdits moyens de paroi (5, 13) comprennent une paroi de fond (5) lesdits moyens de barrière (16) s'étendant le long de ladite paroi de fond (5).

46. Récipient selon l'une quelconque des revendications 24 à 45, et comprenant en outre un goulot fileté (12), lesdits moyens de barrière s'étendant dans ledit goulot fileté (12).

47. Récipient selon l'une quelconque des revendications 24 à 46, et ayant la forme d'une bouteille.
